# FASCICULE DE BREVET EUROPEEN

(11) **EP 3 087 264 B1**
(45) Date de publication et mention de la délivrance du brevet: **26.09.2018**
(21) Numéro de dépôt: 14828262.7
(22) Date de dépôt: 19.12.2014
(51) Int. Cl.: F02C 7/06, F02C 7/277

(54) **DÉMARREUR À AIR DE TURBOMACHINE COMPORTANT DES PREMIER ET DEUXIÈME COMPARTIMENTS DE LUBRIFICATION**
TURBOMASCHINEN-LUFTANLASSER MIT EINER ERSTEN UND EINER ZWEITEN SCHMIERUNGSKAMMER
TURBOMACHINE AIR STARTER COMPRISING FIRST AND SECOND LUBRICATION COMPARTMENTS

(30) Priorité: 23.12.2013 FR 1363449
(43) Date de publication de la demande: 02.11.2016
(73) Titulaire: Safran Power Units, 31200 Toulouse (FR)
(72) Inventeur: STEPHAN, Rémi, F-31590 Verfeil (FR); MOUTON, Pierre, Charles, F-91350 Grigny (FR)
(74) Mandataire: Brevalex
(86) Numéro de dépôt international: PCT/FR2014/053462
(87) Numéro de publication internationale: WO 2015/097380

(56) Documents cités:
- EP-A2- 1 873 359
- EP-A2- 2 362 072
- US-A- 3 269 703

## Description

### DOMAINE TECHNIQUE

La présente invention se rapporte au domaine des turbomachines, et plus particulièrement au domaine général de la lubrification d'un démarreur à air monté sur une boîte à engrenages de transmission de puissance du démarreur vers le moteur.

L'invention s'applique à tout type de turbomachines terrestres ou aéronautiques, et notamment aux turbomachines d'aéronef telles que les turboréacteurs et les turbopropulseurs.

Elle concerne plus précisément un démarreur à air de turbomachine comportant des premier et deuxième compartiments de lubrification, une turbomachine comportant un tel démarreur à air, ainsi qu'un procédé de lubrification en huile d'un tel démarreur à air.

### ÉTAT DE LA TECHNIQUE ANTÉRIEURE

Dans le domaine général des turbomachines, un démarreur à air (encore appelé ATS pour « Air Turbine Starter » en anglais) est une machine utilisée pour démarrer un moteur à turbine, par exemple un moteur d'avion. Le démarreur à air est généralement monté sur une boîte à engrenages de transmission de puissance (encore appelée boîte AGB pour « Accessory Gear Box » en anglais) qui assure la transmission de puissance du démarreur à air vers le moteur.

Le brevet US 4,779,413 A et les demandes de brevet FR 2 911 916 A1 et EP 1 873 359 A2 décrivent des exemples de démarreurs à air utilisés dans des moteurs à turbine à gaz.

Un démarreur à air comporte généralement une turbine, un réducteur, une roue libre et un arbre de liaison, l'ensemble étant porté par des roulements.

Pendant le démarrage, la turbine est alimentée en air sous pression et convertit l'énergie pneumatique de l'air en énergie mécanique destinée à entraîner le moteur en rotation. Le réducteur est quant à lui constitué d'engrenages convertissant la haute vitesse de rotation de la turbine en une vitesse plus faible, adaptée à l'entraînement du moteur.

Par ailleurs, la roue libre autorise l'entraînement du moteur par la turbine et le réducteur et permet en même temps à la turbine et au réducteur de ne pas être entraînés par le moteur.

Une fois que le moteur est démarré, l'alimentation en air du démarreur est arrêtée de sorte que la turbine et le réducteur s'arrêtent. L'arbre de liaison entre le démarreur à air et le moteur continue toutefois de tourner, entraîné par le moteur.

L'arbre de liaison, la roue libre et les roulements qui leur sont associés constituent des pièces du démarreur à air qui tournent aussi longtemps que le moteur tourne, donc en particulier durant tout le vol d'un avion. Cette partie est appelée « partie entraînée » (ou encore préférentiellement désignée par la suite par « partie overrunning » avec utilisation du terme en anglais).

En revanche, la turbine, le réducteur et les roulements qui leur sont associés constituent des pièces du démarreur à air qui ne tournent que pendant le temps du démarrage du moteur. Cette partie est appelée « partie non entraînée » (ou encore préférentiellement désignée par la suite par « partie non overrunning » avec utilisation du terme en anglais).

Par ailleurs, pour pouvoir fonctionner, le démarreur à air, et tout particulièrement la partie « overrunning » du démarreur à air, nécessite une lubrification.

Pendant très longtemps, les démarreurs à air ont été lubrifiés par barbotage à partir d'un bain d'huile indépendant du circuit d'huile du moteur et étaient équipés d'un embrayage à cliquets. Cette solution n'était toutefois pas entièrement satisfaisante pour deux raisons principales : d'une part, il existait un risque de fuite d'huile non indiqué pouvant conduire à la destruction du démarreur à air; d'autre part, il existait une mauvaise tolérance de la roue libre dans les phases dites de « running engagements » et une destruction systématique dans les phases dites de « crash engagements ».

Des solutions ont alors été envisagées pour corriger ces deux principaux inconvénients indépendamment l'un de l'autre.

D'une part, il a été proposé d'associer le bain d'huile du démarreur à air au circuit d'huile du moteur, tout en protégeant le moteur de la contamination que pourrait générer le démarreur à air. Cette solution est couramment connue sous le nom d'AWC pour « Assisted Wet Cavity » en anglais, et décrite dans le brevet US 4,779,413 A. La cavité AWC est une cavité intermédiaire entre le démarreur à air et le moteur, alimentée en huile moteur, qui assure un complément d'huile vers le démarreur à air en cas de fuite de celui-ci.

D'autre part, il a été proposé d'utiliser un embrayage dit « à galets » pour rendre le démarreur à air insensible aux phases de « running engagements » et de « crash engagements ». Cette solution a notamment imposé la lubrification sous pression de la roue libre.

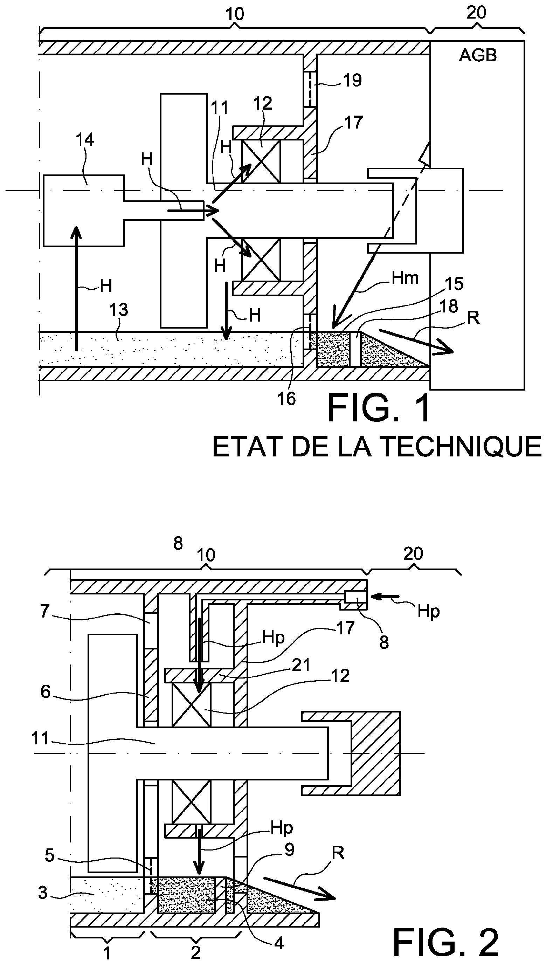

La figure 1 illustre schématiquement un exemple de réalisation d'un circuit de lubrification d'un démarreur à air 10, établi notamment à partir des solutions présentées ci-dessus.

Le démarreur à air 10 est monté sur la boîte à engrenages de transmission de puissance ou AGB 20. L'arbre de liaison 11 du démarreur à air 10 avec les composants en rotation continue de l'embrayage est supporté dans le carter du démarreur à air 10 par un palier 12.

L'huile de lubrification H du démarreur à air 10 est contenue dans un réceptacle 13 interne pour permettre la lubrification du démarreur à air 10. Pour ce faire, le démarreur à air 10 intègre une pompe à huile 14 interne qui assure la lubrification de la partie « overrunning » du démarreur à air 10, comme représenté.

Par ailleurs, le circuit d'huile de lubrification illustré sur la figure 1 comporte encore une cavité du type AWC 15, externe au démarreur à air 10, laquelle est alimentée en huile moteur Hm pour assurer un complément d'huile vers le démarreur à air 10 en cas de fuite de celui-ci. Ainsi, le réceptacle 13 communique avec la cavité AWC 15 au travers d'une ouverture 16, ménagée dans la paroi 17 du carter du démarreur à air 10.

L'ouverture 16 est protégée par une crépine pour protéger le moteur de la contamination que pourrait générer le démarreur à air 10. De plus, le niveau d'huile de la cavité AWC 15, et donc du réceptacle 13, est défini par un déversoir 18 qui autorise un retour R d'huile vers le circuit de récupération d'huile du moteur. En outre, l'équilibrage des pressions entre l'enceinte du démarreur à air 10 et l'enceinte de la boîte AGB 20 est assuré par une ouverture 19 ménagée dans la partie supérieure de la paroi 17 du carter du démarreur à air 10.

Par ce principe de vases communicants, on associe la surveillance du niveau d'huile H du démarreur à air 10 à la surveillance en temps réel du circuit d'huile moteur. On peut aussi éviter à la fois l'engorgement du démarreur à air 10 et le risque de contamination du moteur par de l'huile H provenant du démarreur à air 10.

Néanmoins, si cette solution présentée ci-dessus a permis de résoudre les problèmes de fuite et d'engagement de la roue libre, elle présente plusieurs inconvénients détaillés ci-après.

Premièrement, les éléments du démarreur à air lubrifiés sous pression le sont à partir d'une faible quantité d'huile contenue dans un réservoir 13 de faible volume, qui n'est pas renouvelée et dont la qualité peut se dégrader. Or, d'une part, le réducteur du démarreur à air étant constitué d'engrenages, potentiellement générateurs de pollution du fait des frictions métal/métal entre les dentures des engrenages en fonctionnement qui libèrent des particules, le bain d'huile alimentant la pompe à huile interne, et donc les éléments lubrifiés sous pression, sont exposés à la pollution pouvant provenir du réducteur. D'autre part, la température de cette huile n'est pas surveillée et n'est pas régulée, et son faible volume, recirculant continuellement dans la pompe en circuit quasi fermé, l'expose à une surchauffe potentiellement préjudiciable.

Deuxièmement, l'utilisation d'une pompe à huile interne au démarreur à air augmente le coût et la masse du démarreur à air, et constitue de plus une source potentielle de non fiabilité car une panne de la pompe n'est pas surveillée et peut entraîner la destruction du démarreur à air par manque de lubrification.

Troisièmement, le démarreur à air est susceptible de se vider rapidement de son huile lors d'une prise d'attitude extrême de l'avion, par exemple dans le cas où le fond du réceptacle 13 se trouve remonté par rapport au niveau du déversoir 18. Dans ce cas, le maintien d'un volume d'huile suffisant dans le réceptacle 13 pour alimenter la pompe 14 est problématique, celle-ci n'étant alors plus alimentée et la lubrification de la partie « overrunning » 12 du démarreur à air n'est plus assurée.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention a ainsi pour objet, selon l'un de ses aspects, un démarreur à air de turbomachine, caractérisé en ce qu'il comporte :
- un premier compartiment dans lequel sont situés les éléments dits « non overrunning » (ou encore « non entraînés ») du démarreur à air, qui correspondent aux éléments entraînés en rotation uniquement en phase de démarrage de la turbomachine,
- un deuxième compartiment dans lequel sont situés les éléments dits « overrunning » (ou encore « entraînés ») du démarreur à air, qui correspondent aux éléments entraînés en rotation pendant tout le temps de fonctionnement de la turbomachine, y compris en phase de démarrage,
le premier compartiment comportant un réceptacle d'huile de lubrification par barbotage des éléments « non overrunning », et le deuxième compartiment comportant une cavité du type AWC d'huile de lubrification des éléments « overrunning » alimentée par le retour d'huile de lubrification des éléments « overrunning », eux-mêmes alimentés par de l'huile de lubrification sous pression fournie par la turbomachine, le réceptacle et la cavité étant internes au démarreur à air.

Grâce à l'invention, il peut être possible d'obtenir une lubrification optimale des composants sensibles d'un démarreur à air, en particulier des composants de la partie « overrunning » devant assurer des durées de rotation très importantes (autant que le moteur). En effet, l'huile de lubrification peut être fournie quelles que soient les conditions extérieures (température, altitude, attitude, entre autres). De plus, alors que les solutions de l'art antérieur utilisant une pompe à huile imposent le maintien impératif sous attitudes extrêmes d'un niveau d'huile interne au démarreur à air suffisant, ce qui est délicat à réaliser, le principe selon l'invention peut permettre de garantir la bonne lubrification des éléments « overrunning » quelle que soit l'attitude. A ce sujet, il est à noter que les éléments « non overrunning » du démarreur à air n'ont pas besoin d'être lubrifiés en cas de prise d'attitude car ils sont à l'arrêt étant donné que le moteur est déjà démarré. En outre, la température de l'huile peut être contrôlée par le système de lubrification du moteur. L'huile de lubrification peut également être propre, renouvelée en permanence et filtrée par le moteur.

Par ailleurs, l'invention peut permettre de conserver les avantages liés au principe de l'AWC, et en particulier de contenir la pollution éventuellement générée par le réducteur du démarreur à air, et donc de ne pas contaminer l'AGB. En effet, les éléments « overrunning », qui restent alimentés sous pression par le circuit d'huile moteur, ne sont pas ou pratiquement pas générateurs de pollution.

Enfin, la suppression de la pompe à huile interne au démarreur à air dans la solution de la présente invention peut permettre de réduire le coût, la masse et aussi d'augmenter la fiabilité du démarreur à air.

Le démarreur à air selon l'invention peut en outre comporter l'une ou plusieurs des caractéristiques suivantes prises isolément ou suivant toutes combinaisons techniques possibles.

Le démarreur à air comporte préférentiellement une turbine, un réducteur, une roue libre d'embrayage et un arbre de liaison, l'ensemble étant porté par des roulements.

Les éléments « overrunning » du démarreur à air comportent l'arbre de liaison, la roue libre et les roulements qui leur sont associés.

Les éléments « non overrunning » du démarreur à air comportent la turbine, le réducteur et les roulements qui leur sont associés.

Le réceptacle d'huile de lubrification par barbotage du premier compartiment peut avantageusement communiquer avec la cavité du type AWC du deuxième compartiment par l'intermédiaire d'une première ouverture permettant l'équilibrage des niveaux d'huile entre le réceptacle et la cavité.

Cette première ouverture peut notamment être située en partie basse du démarreur à air, étant notamment formée dans la paroi intermédiaire du carter du démarreur à air permettant la séparation entre les premier et deuxième compartiments.

La première ouverture peut comporter une crépine pour protéger le circuit d'huile de la turbomachine d'une contamination que pourrait générer le démarreur à air dans le réceptacle.

Le premier compartiment et le deuxième compartiment peuvent avantageusement communiquer entre eux par l'intermédiaire d'une deuxième ouverture pour l'équilibrage des pressions d'air entre les deux compartiments.

Cette deuxième ouverture peut notamment être située en partie haute du démarreur à air, étant notamment formée dans la paroi intermédiaire du carter du démarreur à air permettant la séparation entre les premier et deuxième compartiments. Cette deuxième ouverture peut permettre d'assurer un niveau d'huile identique entre l'AWC du deuxième compartiment et le réceptacle du premier compartiment, ce niveau d'huile étant réglé par le déversoir présenté ci-après.

Les éléments « overrunning » du deuxième compartiment peuvent de plus être enfermés dans une cloche de manière à limiter le champ de pression centrifuge du deuxième compartiment.

Les première et deuxième ouvertures peuvent préférentiellement être formées dans une même paroi intermédiaire du carter du démarreur à air délimitant les premier et deuxième compartiments.

Le deuxième compartiment peut comporter un déversoir situé dans la cavité du type AWC, le déversoir définissant le niveau d'huile dans la cavité et autorisant un retour d'huile vers le circuit de récupération d'huile de la turbomachine.

En absence de fuite externe, le démarreur à air est par ailleurs avantageusement dépourvu d'une circulation continue d'huile au travers de la première ouverture comportant une crépine, située entre le réceptacle du premier compartiment et la cavité du deuxième compartiment. En cas de fuite d'huile, une circulation d'huile, fournie par le moteur s'établit mais son sens d'écoulement fait que le moteur se trouve protégé de tout risque de contamination par les contaminants pouvant être contenus dans le premier compartiment.

En outre, l'invention a également pour objet, selon un autre de ses aspects, une turbomachine, caractérisée en ce qu'elle comporte un démarreur à air tel que défini précédemment.

La turbomachine peut tout particulièrement comporter une boîte à engrenages de transmission de puissance AGB, reliée mécaniquement à un arbre d'entraînement en rotation de la turbomachine. Le démarreur à air peut être monté sur l'AGB, laquelle permet la transmission au démarreur à air de l'huile de lubrification sous pression fournie par la turbomachine.

En outre, l'interface entre l'AGB et le démarreur à air peut avantageusement être dépourvue d'étanchéité dynamique. En effet, l'utilisation d'une cavité du type AWC interne au démarreur à air peut permettre de supprimer la présence de joints tournants sur l'arbre de liaison du démarreur à air à l'AGB.

L'invention a encore pour objet, selon un autre de ses aspects, un procédé de lubrification en huile d'un démarreur à air tel que défini précédemment, caractérisé en ce qu'il comporte les étapes suivantes :
- lubrification des éléments « non overrunning » contenus dans le premier compartiment du démarreur à air par barbotage,
- lubrification des éléments « overrunning » contenus dans le deuxième compartiment du démarreur à air par acheminement d'huile sous pression du circuit d'huile de la turbomachine.

Le procédé selon l'invention peut comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 illustre un exemple de circuit de lubrification en huile d'un démarreur à air selon l'art antérieur,
- la figure 2 illustre un exemple de démarreur à air conforme à l'invention, apte à être monté sur une AGB d'une turbomachine, et
- la figure 3 représente, en coupe, le démarreur à air illustré schématiquement sur la figure 2.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

La figure 1 a déjà été décrite précédemment dans la partie relative à l'état de la technique antérieure.

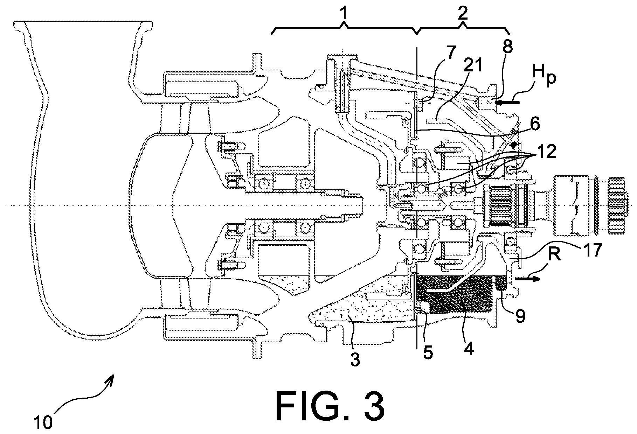

On a par ailleurs illustré en référence aux figures 2 et 3 un exemple de démarreur à air 10 conforme à l'invention, apte à être monté sur une boîte AGB 20 d'une turbomachine.

La figure 2 est une illustration schématique, semblable à celle de la figure 1, du démarreur à air 10 monté sur la boîte AGB 20 d'un moteur, et la figure 3 représente, en coupe, un tel démarreur à air 10.

Comme on peut le voir sur ces figures 2 et 3, le démarreur à air 10 comporte un premier compartiment 1 dans lequel sont situés les éléments « non overrunning » du démarreur à air 10 qui correspondent aux éléments aptes à être entraînés en rotation uniquement en phase de démarrage du moteur. Le démarreur à air 10 comporte également un deuxième compartiment 2 dans lequel sont situés les éléments « overrunning » du démarreur à air 10 qui correspondent aux éléments aptes à être entraînés en rotation en phase de démarrage de la turbomachine et pendant le fonctionnement du moteur.

Par ailleurs, le premier compartiment 1 comporte un réceptacle 3 d'huile de lubrification par barbotage des éléments « non overrunning », et le deuxième compartiment 2 comporte une cavité 4 du type AWC alimentée par le retour d'huile de lubrification des éléments « overrunning » eux-mêmes alimentés sous pression Hp par le moteur. Le réceptacle 3 et la cavité 4 sont internes au démarreur à air 10.

Ainsi, de façon avantageuse, l'invention se propose d'utiliser, dans le deuxième compartiment 2 du démarreur à air 10, l'huile sous pression Hp fournie par le moteur, filtrée et à température régulée et surveillée, comme source d'huile de lubrification sous pression Hp des éléments « overrunning », alors que, dans le premier compartiment 1 du démarreur à air 10, elle se propose de conserver un bain d'huile de lubrification par barbotage associé à l'AWC 4 alimentée par le retour d'huile de lubrification des éléments « overrunning ».

En effet, cette conception permet avantageusement d'isoler les éléments « non overrunning », pouvant se contenter d'une lubrification par barbotage car ne tournant que le temps du démarrage, et les éléments « overrunning », qui eux demandent une lubrification sous pression de qualité car tournant pendant le temps du démarrage et surtout également après le démarrage. De cette façon, il est possible de supprimer la pompe à huile interne, précédemment utilisée dans les solutions de l'art antérieur, et d'améliorer la qualité de la lubrification de la partie « overrunning ». Il en résulte une réduction de coût et de masse, et une amélioration de la fiabilité.

Par ailleurs, deux communications sont ménagées entre le premier compartiment 1 et le deuxième compartiment 2.

Tout d'abord, le réceptacle 3 d'huile de lubrification par barbotage du premier compartiment 1 communique avec la cavité 4 du type AWC du deuxième compartiment 2 par l'intermédiaire d'une première ouverture 5 permettant l'équilibrage des niveaux d'huile entre le réceptacle 3 et la cavité 4. Cette première ouverture 5 est située en partie basse du démarreur à air 10 et formée dans la paroi intermédiaire 6 du carter du démarreur à air 10 qui marque la séparation entre les premier 1 et deuxième 2 compartiments. De manière avantageuse, la première ouverture est par ailleurs équipée d'une crépine pour protéger le circuit d'huile du moteur d'une contamination que pourrait générer le démarreur à air 10 dans le réceptacle 3. Ainsi, le bain d'huile global du démarreur à air 10 est séparé en deux cavités, l'une constituant le réceptacle 3 permettant la lubrification par barbotage des éléments « non overrunning » et l'autre constituant la cavité AWC 4 alimentée en permanence par l'huile de retour des éléments « overrunning » eux même alimentés pour leur lubrification par de l'huile sous pression Hp provenant du moteur.

En outre, la pression d'air entre les premier 1 et deuxième 2 compartiments est maintenu égale par une communication par évent. En effet, le premier compartiment 1 et le deuxième compartiment 2 communiquent avantageusement entre eux par l'intermédiaire d'une deuxième ouverture 7 pour l'équilibrage des pressions d'air entre les deux compartiments. Cette deuxième ouverture 7 est située en partie haute du démarreur à air 10 et formée dans la paroi intermédiaire 6 du carter du démarreur à air 10 qui marque la séparation entre les premier 1 et deuxième 2 compartiments.

Par ailleurs, de manière à limiter l'effet sur l'équilibre des niveaux d'huile de la faible surpression générée par les éléments tournants (ou entraînés) dans le deuxième compartiment 2, ceux-ci sont enfermés dans une cloche 21.

La lubrification par barbotage des éléments « non overrunning » situés dans le premier compartiment 1 est réalisée de façon connue en soi.

La lubrification des éléments « overrunning » situés dans le deuxième compartiment 2 est réalisée de la manière suivante. Le moteur fournit de l'huile sous pression Hp dans une interface 8 appropriée du démarreur à air 10, cette huile Hp étant alors acheminée aux éléments « overrunning » qui nécessitent une lubrification soignée. Elle se déverse ensuite dans la cavité 4 du type AWC. Le deuxième compartiment 2 comporte par ailleurs un déversoir 9, situé dans la cavité 4 du type AWC, qui définit le niveau d'huile dans la cavité 4. De cette façon, le déversoir 9, faisant office de trop plein, peut autoriser un retour d'huile R de l'huile déversée dans la cavité 4 vers le circuit de récupération d'huile du moteur, au travers d'une ouverture formée dans la paroi extérieure 17 du carter du démarreur à air 10.

Bien entendu, l'invention n'est pas limitée à l'exemple de réalisation qui vient d'être décrit. Diverses modifications peuvent y être apportées par l'homme du métier.

L'expression « comportant un » doit être comprise comme étant synonyme de « comportant au moins un », sauf si le contraire est spécifié.

## Revendications

1. Démarreur à air (10) de turbomachine, **caractérisé en ce qu'**il comporte :
- un premier compartiment (1) dans lequel sont situés les éléments dits « non entraînés » du démarreur à air (10), qui correspondent aux éléments entraînés en rotation uniquement en phase de démarrage de la turbomachine,
- un deuxième compartiment (2) dans lequel sont situés les éléments dits « entraînés » du démarreur à air (10), qui correspondent aux éléments entraînés en rotation pendant tout le temps de fonctionnement de la turbomachine, y compris en phase de démarrage,
le premier compartiment (1) comportant un réceptacle (3) d'huile de lubrification par barbotage des éléments « non entraînés », et le deuxième compartiment (2) comportant une cavité (4) du type AWC d'huile de lubrification des éléments « entraînés » alimentée par le retour d'huile de lubrification des éléments « entraînés », eux-mêmes alimentés par de l'huile de lubrification sous pression (Hp) fournie par la turbomachine, le réceptacle (3) et la cavité (4) étant internes au démarreur à air (10).

2. Démarreur à air selon la revendication 1, **caractérisé en ce que** le réceptacle (3) d'huile de lubrification par barbotage du premier compartiment (1) communique avec la cavité (4) du type AWC du deuxième compartiment (2) par l'intermédiaire d'une première ouverture (5) permettant l'équilibrage des niveaux d'huile entre le réceptacle (3) et la cavité (4).

3. Démarreur à air selon la revendication 2, **caractérisé en ce que** la première ouverture (5) comporte une crépine pour protéger le circuit d'huile de la turbomachine d'une contamination que pourrait générer le démarreur à air (10) dans le réceptacle (3).

4. Démarreur à air selon l'une des revendications précédentes, **caractérisé en ce que** le premier compartiment (1) et le deuxième compartiment (2) communiquent entre eux par l'intermédiaire d'une deuxième ouverture (7) pour l'équilibrage des pressions d'air entre les deux compartiments (1, 2).

5. Démarreur à air selon l'une quelconque des revendications précédentes, **caractérisé en ce que** les éléments dits « entraînés » du deuxième compartiment (2) sont enfermés dans une cloche (21) de manière à limiter le champ de pression centrifuge du deuxième compartiment (2).

6. Démarreur à air selon la revendication 2 ou 3 en combinaison avec la revendication 4 **caractérisé en ce que** les première (5) et deuxième (7) ouvertures sont formées dans une même paroi intermédiaire (6) du carter du démarreur à air (10) délimitant les premier (1) et deuxième (2) compartiments.

7. Démarreur à air selon l'une quelconque des revendications précédentes, **caractérisé en ce que** le deuxième compartiment (2) comporte un déversoir (9) situé dans la cavité (4) du type AWC, le déversoir (9) définissant le niveau d'huile dans la cavité (4) et autorisant un retour d'huile (R) vers le circuit de récupération d'huile de la turbomachine.

8. Turbomachine, **caractérisée en ce qu'**elle comporte un démarreur à air (10) selon l'une quelconque des revendications précédentes.

9. Turbomachine selon la revendication 8, **caractérisée en ce qu'**elle comporte une boîte à engrenages de transmission de puissance AGB (20), reliée mécaniquement à un arbre d'entraînement en rotation de la turbomachine, et **en ce que** le démarreur à air (10) est monté sur l'AGB (20), laquelle permet la transmission au démarreur à air (10) de l'huile de lubrification sous pression (Hp) fournie par la turbomachine.

10. Procédé de lubrification en huile d'un démarreur à air (10) selon l'une quelconque des revendications 1 à 7, **caractérisé en ce qu'**il comporte les étapes suivantes :
- lubrification des éléments « non entraînés » contenus dans le premier compartiment (1) du démarreur à air (10) par barbotage,
- lubrification des éléments « entraînés » contenus dans le deuxième compartiment du démarreur à air (10) par acheminement d'huile sous pression (Hp) du circuit d'huile de la turbomachine.

## Patentansprüche

1. Luftanlasser (10) für Turbotriebwerke,
**dadurch gekennzeichnet,**
**dass** er umfasst:
- einen ersten Raum (1), in dem sich die so genannten "nicht angetriebenen" Elemente des Luftanlassers (10) befinden, die nur in der Phase des Startens des Turbotriebwerks mit den in Drehbewegung angetriebenen Elementen in Verbindung stehen,
- einen zweiten Raum (2), in dem sich die so genannten "angetriebenen" Elemente des Luftanlassers (10) befinden, die mit den in Drehbewegung angetriebenen Elementen während der gesamten Betriebszeit des Turbotriebwerks einschließlich in der Startphase in Verbindung stehen,
wobei der erste Raum (1) einen Ölauffangbehälter (3) für die Schmierung der "nicht angetriebenen" Elemente durch Spülen enthält, und der zweite Raum (2) eine Aushöhlung (4) des Typs AWC für die Ölschmierung der "angetriebenen" Elemente enthält, welche durch den Rücklauf von Schmieröl der "angetriebenen" Elemente gespeist wird, die ihrerseits mit unter Druck stehendem Schmieröl (Hp), das vom Turbotriebwerk abgegeben wird, versorgt werden, wobei der Auffangbehälter (3) und die Aushöhlung (4) sich im Inneren des Luftanlassers (10) befinden.

2. Luftanlasser nach Anspruch 1,
**dadurch gekennzeichnet,**
**dass** der Ölauffangbehälter (3) zur Schmierung durch Spülen des ersten Raums (1) mit der Aushöhlung (4) des Typs AWC des zweiten Raums (2) über eine erste Öffnung (5) kommuniziert, die den Ausgleich der Ölstände zwischen dem Ölauffangbehälter (3) und der Aushöhlung (4) ermöglicht.

3. Luftanlasser nach Anspruch 2,
**dadurch gekennzeichnet,**
**dass** die erste Öffnung (5) einen Schutzfilter enthält, um den Ölkreis des Turbotriebwerks vor einer Verunreinigung zu schützen, die der Luftanlasser (10) in dem Ölauffangbehälter (3) verursachen könnte.

4. Luftanlasser nach einem der vorigen Ansprüche,
**dadurch gekennzeichnet,**
**dass** der erste Raum (1) und der zweite Raum (2) miteinander über eine zweite Öffnung (7) für den Luftdruckausgleich zwischen den beiden Räumen (1, 2) kommunizieren.

5. Luftanlasser nach einem der vorigen Ansprüche,
**dadurch gekennzeichnet,**
**dass** die so genannten "angetriebenen" Elemente des zweiten Raums (2) in einer Glocke (21) eingeschlossen sind, so dass der Zentrifugaldruckbereich des zweiten Raums (2) begrenzt wird.

6. Luftanlasser nach Anspruch 2 oder 3 in Kombination mit Anspruch 4,
**dadurch gekennzeichnet,**
**dass** die erste Öffnung (5) und die zweite Öffnung (7) in einer und der selben Zwischenwand (6) des Gehäuses des Luftanlassers (10) gebildet sind, die den ersten Raum (1) und den zweiten Raum (2) abgrenzt.

7. Luftanlasser nach einem der vorigen Ansprüche,
**dadurch gekennzeichnet,**
**dass** der zweite Raum (2) einen Überlauf (9) aufweist, der sich in der Aushöhlung (4) des Typs AWC befindet, wobei der Überlauf (9) den Ölstand in der Aushöhlung (4) bestimmt und einen Rückfluss von Öl (R) zu dem Ölrückgewinnungskreis des Turbotriebwerks erlaubt.

8. Turbotriebwerk,
**dadurch gekennzeichnet,**
**dass** es einen Luftanlasser (10) nach einem der vorigen Ansprüche aufweist.

9. Turbotriebwerk nach Anspruch 8,
**dadurch gekennzeichnet,**
**dass** es ein Getriebe zur Kraftübertragung AGB (20) aufweist, das mechanisch mit einer Drehantriebswelle des Turbotriebwerks verbunden ist, und dass der Luftanlasser (10) an dem AGB (20) angebracht ist, welches die Übertragung von unter Druck stehendem Schmieröl (Hp) vom Turbotriebwerk zum Luftanlasser (10) ermöglicht.

10. Verfahren zur Ölschmierung eines Luftanlassers (10) nach einem der Ansprüche 1 bis 7,
**dadurch gekennzeichnet,**
**dass** es folgende Verfahrensschritte enthält:
- Schmieren der in dem ersten Raum (1) des Luftanlassers (10) befindlichen "nicht angetriebenen" Elemente durch Spülen,
- Schmieren der in dem zweiten Raum (2) des Luftanlassers (10) befindlichen "angetriebenen" Elemente durch Zuführen von unter Druck stehendem Öl (Hp) aus dem Ölkreis des Turbotriebwerks.

## Claims

1. Turbomachine air starter (10), **characterised in that** it comprises:
- a first compartment (1) wherein the so-called "non-overrunning" elements of the air starter (10) are situated, corresponding to the elements which are only run in the turbomachine starting phase,
- a second compartment (2) wherein the so-called "overrunning" elements of the air starter (10) are situated, corresponding to the elements which are run throughout the operating time of the turbomachine, including the starting phase,
the first compartment (1) comprising an oil receptacle (3) for oil splash lubrication of the "non-overrunning" elements, and the second compartment (2) comprising an AWC type oil cavity (4) for lubrication of the "overrunning" elements supplied by the lubrication oil return of the "overrunning" elements, in turn supplied with pressurised lubrication oil (Hp) supplied by the turbomachine, the receptacle (3) and the cavity (4) being internal to the air starter (10).

2. Air starter according to claim 1, **characterised in that** oil receptacle (3) for oil splash lubrication of the first compartment (1) communicates with the AWC type cavity (4) of the second compartment (2) via a first opening (5) enabling the equilibration of the oil levels between the receptacle (3) and the cavity (4).

3. Air starter according to claim 2, **characterised in that** the first opening (5) comprises a strainer to protect the turbomachine oil circuit from contamination liable to be generated by the air starter (10) in the receptacle (3).

4. Air starter according to any one of the preceding claims, **characterised in that** the first compartment (1) and the second compartment (2) communicate with one another via a second opening (7) for the equilibration of the air pressures between the two compartments (1, 2).

5. Air starter according to any one of the preceding claims, **characterised in that** the so-called "overrunning" elements of the second compartment (2) are enclosed in a bell (21) so as to limit the centrifugal pressure field of the second compartment (2).

6. Air starter according to claim 2 or 3 in combination with claim 4, **characterised in that** the first (5) and second (7) openings are formed in the same intermediate wall (6) of the casing of the air starter (10) defining the first (1) and second (2) compartments.

7. Air starter according to any one of the preceding claims, **characterised in that** the second compartment (2) comprises a spout (9) situated in the AWC type cavity (4), the spout (9) defining the oil level in the cavity (4) and allowing a return of oil (R) to the turbomachine oil recovery circuit.

8. Turbomachine, **characterised in that** it comprises an air starter (10) according to any one of the preceding claims.

9. Turbomachine according to claim 8, **characterised in that** it comprises an accessory gear box AGB (20), mechanically connected to a rotational drive shaft of the turbomachine, and **in that** the air starter (10) is mounted on the AGB (20), which enables the transmission to the air starter (10) of the pressurised lubrication oil (Hp) supplied by the turbomachine.

10. Method for oil lubrication of an air starter (10) according to any one of claims 1 to 7, **characterised in that** it comprises the following steps:
- lubrication of the "non-overrunning" elements contained in the first compartment (1) of the air starter (10) by oil splash lubrication,
- lubrication of the "overrunning" elements contained in the second compartment of the air starter (10) by conveyance of pressurised oil (Hp) from the turbomachine oil circuit.
